# EUROPEAN PATENT SPECIFICATION

(11) **EP 3 065 280 B1**
(45) Date of publication and mention of the grant of the patent: **15.05.2019**
(21) Application number: 15157385.4
(22) Date of filing: 03.03.2015
(51) Int. Cl.: H02M 3/158, H05B 33/08

(54) **Operating device for a light emitting means and method of controlling an operating device**
Betriebsvorrichtung für ein lichtemittierendes Mittel und Verfahren zur Steuerung einer Betriebsvorrichtung
Dispositif de fonctionnement pour une source de lumière et procédé de commande d'un tel dispositif

(43) Date of publication of application: 07.09.2016
(73) Proprietor: Tridonic GmbH & Co KG, 6851 Dornbirn (AT)
(72) Inventor: Kelly, Jamie, North Shields, Tyne and Wear NE29 8AH (GB)
(74) Representative: Banzer, Hans-Jörg

(56) References cited:
- WO-A1-2013/102879
- US-A1- 2007 091 036
- US-A1- 2014 252 950
- US-B1- 7 495 419

## Description

### TECHNICAL FIELD

Embodiments of the invention relate to operating devices for light emitting means. Embodiments of the invention relate in particular to an operating device for a light emitting means which comprises an emergency driver for supplying energy to the light emitting means in an emergency situation.

### BACKGROUND

Novel light sources such as light sources based on light emitting diodes (LEDs) or discharge lamps become increasingly popular. Operating devices for such light sources are operative to provide an output current or output voltage to a light emitting means of the light source.

Emergency operation may be required for safety reasons or for convenience reasons. In power failure situations, it may be required or at least desired to provide emergency lighting. Emergency power supply may be provided by one battery or several batteries. The battery or batteries may be installed in the operating device or may be provided separately from the operating device. It is also possible that one or several batteries for use in emergency situations are provided at a central location so as to supply several operating devices with energy in the emergency situation.

One or several converters may be used to supply a current or voltage to a light emitting means, with the one or several converters being interconnected between the at least one battery and the light emitting means. The construction of the converter(s) which are provided for emergency situations may limit the types of batteries and/or light emitting means for which the operating device may provide emergency power supply. For illustration, depending on the construction of the converter(s) which are provided for emergency situations, the operating device may be operative to provide emergency power supply only when the forward voltage of the light emitting means is greater than the output voltage of the at least one battery. Providing different types of operating devices, depending on the relative magnitude of the forward voltage of the light emitting means and the output voltage of the at least one battery, adds to manufacturing, stock keeping and installation costs.

An operating device according to the preamble of claim 1 is known from US 7,495,419 B1.

### SUMMARY

There is a continued need in the art for devices, systems and methods in which flexibility is attained so that an operating device may be used in association with different types of emergency batteries and/or with light emitting means having different forward voltages. There is in particular a need in the art for such devices, systems and methods in which the operating device comprises an emergency driver which has a simple configuration while being operable for use both when the output voltage of the emergency battery or emergency batteries is greater than the forward voltage of the light emitting means and when the output voltage of the emergency battery or emergency batteries is less than the forward voltage of the light emitting means.

According to the invention, an operating device as defined in claim 1 is provided. The dependent claims define preferred and/or advantageous embodiments of the invention.

### BRIEF DESCRIPTION OF THE SEVERAL VIEWS OF THE DRAWINGS

Embodiments of the invention will be described in detail with reference to the drawings in which identical and like reference numerals designate identical and like elements.
FIG. 1 is a diagram of a system comprising an operating device according to an embodiment.
FIG. 2 is a diagram of a system comprising an operating device according to an embodiment.
FIG. 3 is a circuit diagram of an emergency driver of an operating device according to an embodiment.
FIG. 4 is a circuit diagram of an emergency driver of an operating device according to an embodiment.
FIG. 5 is a circuit diagram of an emergency driver of an operating device according to an embodiment.
FIG. 6 and FIG. 7 illustrate control signals for controllable switches of the emergency driver of FIG. 5.
FIG. 8 is a circuit diagram of an emergency driver of an operating device which does not form part of the invention.
FIG. 9 and FIG. 10 illustrate control signals for controllable switches of the emergency driver of FIG. 8.
FIG. 11 is a circuit diagram of an emergency driver of another operating device which does not form part of the invention.
FIG. 12 is a flow chart of a method which may be performed by the operating device of the invention.

### DETAILED DESCRIPTION OF EMBODIMENTS

Exemplary embodiments of the invention will now be described in detail with reference to the drawings.

According to embodiments of the invention, an operating device for a light emitting means comprises an emergency driver. The emergency driver may operate as a DC/DC converter. The emergency driver may operate as a one-stage DC/DC converter. The emergency driver may be configured to drain energy from at least one battery to provide emergency power supply for the at least one light emitting means. As will be described in more detail below, the emergency driver is configured such that it can be selectively operated as a buck converter or as a boost converter, depending on relative magnitudes of an output voltage of the at least one battery and an operating voltage of the light emitting means.

Such an operating device can be used in combination with different types of batteries for emergency power supply and/or with different types of light emitting means. In particular, the same operating device may be used in association with a light emitting means having an operating voltage that is less than an output voltage of a battery and in association with another light emitting means having an operating voltage that is less than an output voltage of a battery. Increased flexibility is provided, while mitigating problems associated with more complex multi-stage driver topologies.

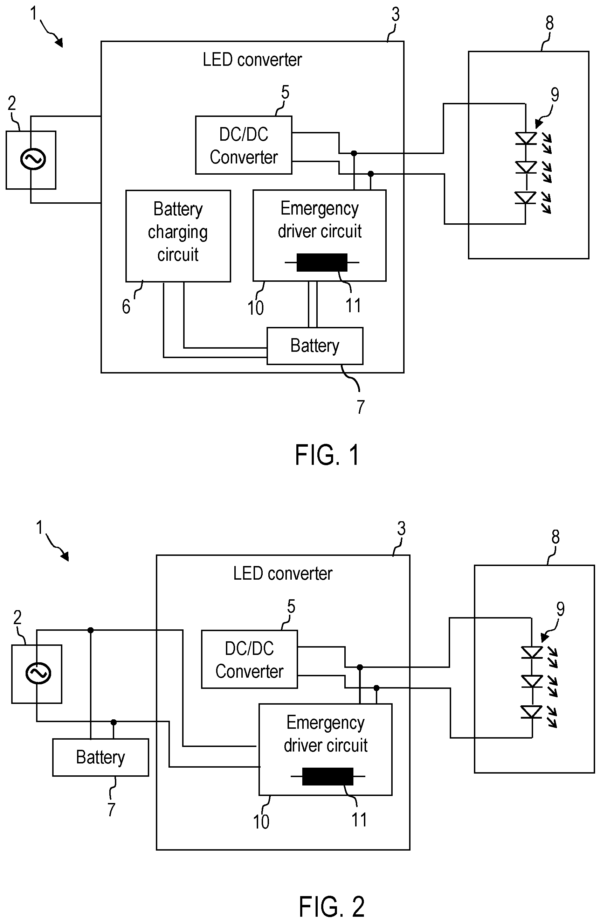

FIG. 1 is a diagram of a system 1 according to an embodiment. The system 1 comprises an operating device 3 which may be configured as a LED converter.

The system 1 comprises a light emitting means 8. An output current of the operating device 3 is fed to the light emitting means 8. The light emitting means 8 may comprise one light emitting diode (LED) or plural LEDs 9. The one or plural LED(s) 9 may be inorganic and/or organic LEDs. The operating device 3 may operate as a current source for the LED(s) 9.

The operating device 3 and the light emitting means 8 may be combined in a light source, e.g. a retrofit bulb.

The operating device 3 may have inputs for connection with a source 2. The source 2 may be a power supply network. During normal operating, the operating device 3 may be configured to operate as a current source or as a voltage source for the light emitting means 8. The operating device 3 may comprise a rectifier and a power factor conversion (PFC) circuit (not shown in FIG. 1) and a DC/DC converter 5. The DC/DC converter 5 may comprise a transformer. In non-emergency operation, the DC/DC converter 5 may provide a current or voltage to the light emitting means 8. The configuration of the DC/DC converter 5 is not germane to the configuration of the emergency driver which will be described in more detail below.

The operating device 3 comprises an emergency driver 10. Generally, the emergency driver 10 is configured to supply a current or voltage to the light emitting means 8 in emergency operation. Failure of the source 2 may be one example for a situation which triggers emergency operation.

The emergency driver 10 is operative to drain power from at least one battery 7. The emergency driver 10 may be configured such that it is operates as a buck converter or as a boost converter, depending on whether an output voltage of the at least one battery 7 is greater than or less than an operating voltage of the light emitting means 8. The operating voltage of the light emitting means 8 may be a forward voltage of the LED(s) 9 of the light emitting means 8.

The at least one battery 7 may be received in a receptacle of the operating device 3. The at least one battery 7 may be rechargeable. The operating device 3 may comprise a battery charging circuit 6 for charging the at least one battery in non-emergency operation of the operating device 3. The battery charging circuit 6 may comprise an AC/DC converter or a DC/DC converter.

In order to allow the operating device 3 to be used with different types of batteries 7 for emergency operation and/or with light emitting means 8 having different forward voltages, the emergency driver 10 may be operated both as a buck converter and as a boost converter, depending on relative magnitudes of the output voltage of the at least one battery 7 and the operating voltage of the light emitting means 8. The emergency driver 10 may operate as a buck converter if an output voltage of the at least one battery 7 is greater than the operating voltage of the light emitting means 8. The emergency driver 10 may operate as a boost converter if the output voltage of the at least one battery 7 is less than the operating voltage of the light emitting means 8.

The emergency driver may comprise an inductance 11. The inductance 11 may be used for storing energy therein and for releasing energy from the inductance 11 to the light emitting means 8, for both buck converter operation and boost converter operation of the emergency driver 10. I.e., one and the same inductance 11 may be used for both buck converter operation and boost converter operation of the emergency driver.

As will be explained in more detail below, the emergency driver 10 may have a variety of configurations which allow the emergency driver 10 to operate as buck converter if an output voltage of the at least one battery 7 is greater than the operating voltage of the light emitting means 8 and as boost converter if the output voltage of the at least one battery 7 is less than the operating voltage of the light emitting means 8.

The emergency driver 10 may comprise a controllable switch which is controlled to undergo switching cycles. If the emergency driver 10 operates as a buck converter, energy may be stored in the inductance 11 through the controllable switch. If the emergency driver 10 operates as a buck converter, energy stored in the inductance 11 may be released through the same controllable switch to the light emitting means 8.

FIG. 2 shows a system 1 according to another embodiment. The at least one battery 7 may be provided separately from the operating device 3. The at least one battery 7 may be connected to a plurality of operating devices for emergency operation. The operating device 3 may be connected to the at least one battery 7 through connection lines which also connect the operating device 3 to the source 2. The operating device 3 may be connected to the at least one battery 7 through connection lines which are different from the connections through which the operating device 3 is connected to the source 2. A battery charging circuit for the at least one battery 7 may be provided separately from the operating device 3.

Both in the operating device 3 of the system 1 of FIG. 1 and in the operating device 3 of the system 1 of FIG. 2, different techniques may be used to selectively configure the emergency driver 10 for buck converter operation or for boost converter operation, depending on whether the output voltage of the at least one battery 7 is less than or greater than the operating voltage of the light emitting means 8. The at least one battery 7 and light emitting means 8 may be connected to different terminals of the emergency driver 10, depending on whether the output voltage of the at least one battery 7 is less than or greater than the operating voltage of the light emitting means 8. This may be done by using different wiring, circuit elements such as jumpers and/or by further controllable switches which are controlled in dependence on whether the output voltage of the at least one battery 7 is less than or greater than the operating voltage of the light emitting means 8.

In any one of the various embodiments, operation of the emergency driver 10 may be triggered by an emergency situation, e.g. failure of the supply 2. Different techniques may be used to this end. The operating device 3 may be configured to detect failure of the supply 2 and to trigger operation of the emergency driver 10 in response to detecting a power failure of the supply 2. Alternatively or additionally, the operating device 3 may have an interface for receiving a command which causes the operating device 3 to initiate emergency operation. The interface may be different from the power supply input connected to the supply 2 or may be integral therewith for power line communication.

A decision on whether the emergency driver 10 is to operate as a buck converter or as a boost converter may be made by the manufacturer of a light source, for example. This can be done by setting jumpers or connecting the battery to different terminals of the emergency driver 10, as will be explained in more detail below. Alternatively or additionally, the operating device 3 may be configured to automatically configure the emergency driver 10 for operation as a buck converter or for operation as a boost converter. The operating device 3 may compare an output voltage of the at least one battery to the forward voltage of the light emitting means 8 connected to an output of the operating device to determine whether the emergency driver 10 is to operate as a buck converter or as a boost converter.

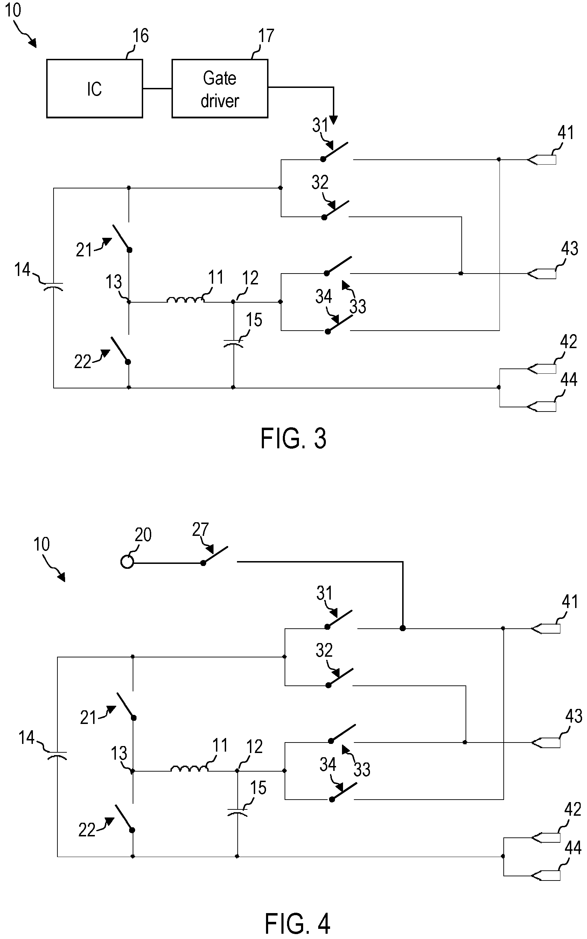

FIG. 3 is a circuit diagram of an emergency driver 10 of an operating device 3 according to an embodiment. The emergency driver 10 comprises an inductance 11 having a first inductance terminal 12 and a second inductance terminal 13.

The emergency driver 10 comprises a plurality of controllable switches 21, 22, 31-34. The emergency driver 10 may be configured such that a first switch 21 of the plurality of controllable switches may be selectively connected in between the at least one battery 7 and the inductance 11 or in between the inductance 11 and the light emitting means, depending on the relative magnitudes of the output voltage of the at least one battery 7 and the operating voltage of the light emitting means 8.

The emergency driver 10 may be configured such that energy is stored in the inductance 11 from the at least one battery 7 through the first switch 21 when the emergency driver 10 operates as a buck converter. The energy may be released from the inductance 11 to the light emitting means 8 through the first inductance terminal 12.

The emergency driver 10 may be configured such that energy is released from the inductance 11 to the light emitting means 8 through the first switch 21 when the emergency driver 10 operates as a boost converter. The energy may be stored in the inductance 11 through the first inductance terminal 12.

The emergency driver 10 comprises a first terminal 41 and a second terminal 42 configured for connection with the at least one battery 7. The emergency driver 10 comprises a third terminal 43 and a fourth terminal 44 configured for connection with the light emitting means 8.

The first switch 21 is connected in between the first terminal 41 and the second inductance terminal 13. A diode may be integrated in the first switch 21 or may be provided separately therefrom. For illustration, the first switch 21 may be an electrically controllable switch. The first switch 21 may be a semiconductor switch. The first switch 21 may be a semiconductor switch having an isolated gate electrode, e.g. a MOSFET.

A second switch 22 is connected in between the second terminal 42 and the second inductance terminal 13. A diode may be integrated in the second switch 22 or may be provided separately therefrom. For illustration, the second switch 22 may be an electrically controllable switch. The second switch 22 may be a semiconductor switch. The second switch 22 may be a semiconductor switch having an isolated gate electrode, e.g. a MOSFET.

As will be explained in more detail below, the first switch 21 and/or the second switch 22 may be controlled so as to perform a plurality of switching cycles, to store energy in the inductance 11 and/or release energy from the inductance 11.

The emergency driver 10 may comprise a capacitance 14 in parallel with the series connection of the first switch 21 and the second switch 22. The capacitance 14 may be formed by a capacitor. The capacitance 14 may be formed by a parasitic capacitance. The capacitance 14 may be charged and discharged when the emergency driver 10 operates as a boost converter.

The emergency driver 10 may comprise a further capacitance 15 connected between the first inductance terminal 12 and the second and fourth terminals 82, 84. The further capacitance 15 may be formed by a further capacitor. The further capacitance 15 may be formed by a parasitic capacitance. The further capacitance 15 may be charged and discharged when the emergency driver 10 operates as a buck converter.

In order to allow the emergency driver 10 to be selectively configured for buck converter operation and boost converter operation, the emergency driver 10 is configured such that the first switch 21 may be selectively connected in between the inductance 11 and either the first terminal 41 for the at least one battery 7 or the third terminal 43 configured for connection with the light emitting means 8. The emergency driver 10 may comprise further controllable switches which allow the at least one battery 7 to charge the inductance 11 through the first switch 21 for buck converter operation, and which allow the inductance 11 to be discharged through the first switch 21 for boost converter operation.

The emergency driver 10 may comprise a first further switch 31 connected between the first switch 21 and the first terminal 41 for connection to the at least one battery 7. The emergency driver 10 may comprise a second further switch 32 connected between the first switch 21 and the third terminal 43 for connection to the light emitting means 8.

The first further switch 31 and the second further switch 32 may respectively be controlled such that at most one of the first further switch 31 and the second further switch 32 is ON, i.e. conducting, at any given time.

When the first further switch 31 is ON and the second further switch 32 is OFF, i.e. in a high-resistance state, energy may be stored in the inductance 11 through the first switch 21 for buck converter operation. When the first further switch 31 is OFF and the second further switch 32 is ON, energy may be released from the inductance 11 through the first switch 21 to the light emitting means 8 for boost converter operation.

In order to allow the emergency driver 10 to be configured for buck converter operation and boost converter operation, the emergency driver 10 is configured such that the first inductance terminal 12, i.e. the terminal different from the second inductance terminal to which the first switch 21 is connected, may be connected to either the first terminal 41 for the at least one battery 7 or the third terminal 43 configured for connection with the light emitting means 8. The emergency driver 10 may comprise further controllable switches which allow the at least one battery 7 to charge the inductance 11 through the first inductance terminal 12 for buck converter operation, and which allow the inductance 11 to be discharged through the first inductance terminal 12 for boost converter operation.

The emergency driver 10 may comprise a third further switch 33 connected between the inductance 11 and the third terminal 43 for connection to the light emitting means 8. The emergency driver 10 may comprise a fourth further switch 34 connected between the inductance 11 and the first terminal 41 for connection to the at least one battery 7.

The third further switch 33 and the fourth further switch 34 may respectively be controlled such that at most one of the third further switch 33 and the fourth further switch 34 is ON, i.e. conducting, at any given time. The third further switch 33 may be controlled such that, during emergency operation of the operating device, the third further switch 33 is ON when the second further switch 32 is OFF and that the third further switch 33 is OFF when the second further switch 32 is ON. The fourth further switch 34 may be controlled such that, during emergency operation of the operating device, the fourth further switch 34 is ON when the first further switch 31 is OFF and that the fourth further switch 34 is OFF when the first further switch 31 is ON.

When the third further switch 33 is ON and the fourth further switch 34 is OFF energy may be released from the inductance 11 to the light emitting means 8 for buck converter operation. When the third further switch 33 is OFF and the fourth further switch 34 is ON, energy may be stored in the inductance 11 from the at least one battery 7 for boost converter operation.

The first further switch 31, the second further switch 32, the third further switch 33 and the fourth further switch 34 may respectively be semiconductor switches. The first further switch 31, the second further switch 32, the third further switch 33 and the fourth further switch 34 may respectively be semiconductor switches having isolated gate electrodes. The first further switch 31, the second further switch 32, the third further switch 33 and the fourth further switch 34 may respectively be MOSFETs.

The first and second switches 21, 22 which are made to undergo switching cycles and/or the first further switch 31, the second further switch 32, the third further switch 33 and the fourth further switch 34 may be controlled by an integrated circuit 16 of the operating device 3. The integrated circuit 16 may be a controller, a microcontroller, a processor, a microprocessor, an application specific integrated circuit (ASIC) or a combination of such or other integrated circuits. The integrated circuit 16 may control the controllable switches 21, 22, 31-34 directly or via a gate driver circuit 17.

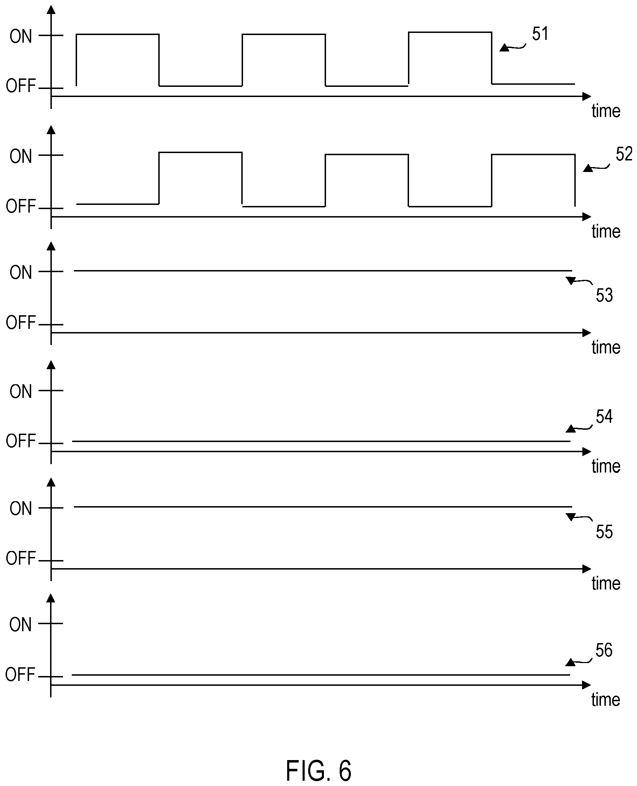

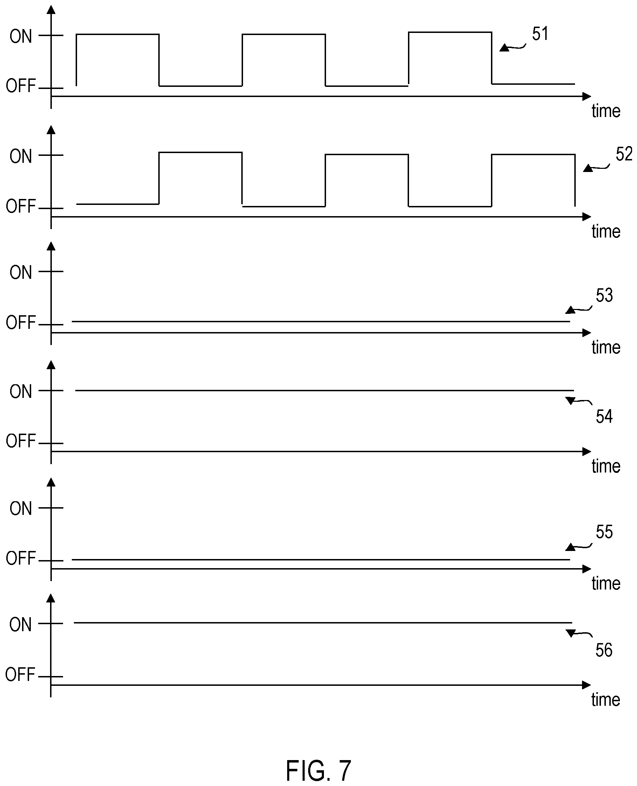

Operation of the operating device comprising the emergency driver 10 will be described further in association with FIG. 6 and FIG. 7 below.

While some or all of the further switches 31-34 may be implemented as electrically controllable switches, one or several of the further switches 31-34 may also be configured such that they are mechanically actuable and/or that they are implemented by jumpers or other mechanically adjustable elements.

FIG. 4 is a circuit diagram of an emergency driver 10 according to an embodiment. The emergency driver 10 comprises an inductance and switches which may be configured as explained with reference to FIG. 3 above.

For battery charging during non-emergency operation, a charging control switch 27 may be provided. A charging current may be supplied via a terminal 20. The charging current may be provided by a battery charging circuit 6 of the operating device 7. The charging control switch 27 may be selectively controlled in dependence on whether battery charging is to be performed.

An integrated circuit 16 and, optionally, a gate driver circuit 17 may be provided for controlling the various controllable switches, as explained with reference to FIG. 3.

Operation of the operating device comprising the emergency driver 10 will be described further in association with FIG. 6 and FIG. 7 below.

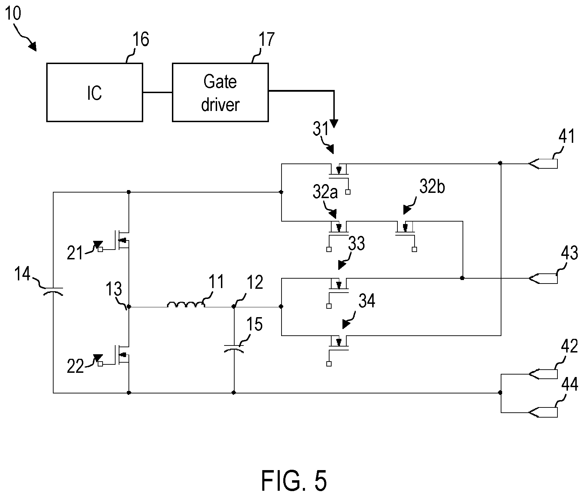

FIG. 5 is an emergency driver is a circuit diagram of an emergency driver 10 according to an embodiment.

The emergency driver 10 comprises a first switch 21 and a second switch 22 which are electrically controllable and which are operative as explained with reference to FIG. 3 above. The first switch 21 and the second switch 22 are respectively configured as MOSFETs. Other semiconductor switches may be used instead of MOSFETs.

In the emergency driver 10, the first further switch 31 may be configured as a MOSFET or may comprise one or several MOSFETs. The second further switch 32 may be configured as a MOSFET or may comprise one or several MOSFETs 32a, 32b. Providing several MOSFETs 32a, 32b may be particularly effective for providing battery discharge in non-emergency operation and/or for blocking a direct current flow from the at least one battery 7 to the light emitting diode(s) 9 of the light emitting means 8. The third further switch 33 may be configured as a MOSFET or may comprise one or several MOSFETs. The fourth further switch 34 may be configured as a MOSFET or may comprise one or several MOSFETs.

The first switch 21, the second switch 22 and the further switches 31, 32a, 32b, 33, and 34, which collectively represent controllable electrical switches, may be controlled by an integrated circuit 16.

Operation of the operating device comprising the emergency driver 10 as explained with reference to any one of FIG. 3 to FIG. 5 will be explained in more detail with reference to FIG. 6 and FIG. 7. One or several of the further switches 31-34 are operated differently, depending on whether an output voltage of the at least one battery supplied between the first terminal 41 and the second terminal 42 is less than or greater than the operating voltage of the light emitting means 8 connected to the third terminal 43 and the fourth terminal 44 in emergency operation.

FIG. 6 shows states of various switches of the emergency driver 10 of FIG. 3 to FIG. 5 when the emergency driver 10 is controlled to operate as a buck converter when the output voltage of the at least one battery 7 is greater than the operating voltage of the light emitting means 8.

FIG. 7 shows states of various switches of the emergency driver 10 of FIG. 3 to FIG. 5 when the emergency driver 10 is controlled to operate as a boost converter when the output voltage of the at least one battery 7 is less than the operating voltage of the light emitting means 8.

Both in FIG. 6 and in FIG. 7 the ON state of a switch represents a conducting state in which the source-drain resistance is less than in an OFF state, in which the source-drain path may be high-ohmic.

Both in FIG. 6 and in FIG. 7, a state of the first switch 21 is shown at 51 and a state of the second switch 22 is shown at 52. The first switch 21 and the second switch 22 are controlled to undergo a plurality of switching cycles. An output current and/or output voltage may be monitored to determine at which time(s) the switching state of the first switch 21 and/or the second switch 22 is to be changed.

Referring now to FIG. 6, the emergency driver 10 may be controlled such that it operates as a buck converter when the output voltage of the at least one battery 7 is less than the operating voltage of the light emitting means 8. A state of the first further switch 31 is shown at 53. A state of the second further switch 32 is shown at 54. For buck converter operation, the first further switch 31 may be set to an ON state and the second further switch 32 may be set to an OFF state. Energy may be stored in the inductance 11 through the first switch 21.

When the second further switch 32 comprises a plurality of MOSFETs 32a, 32b in a series configuration, at least one of the MOSFETs 32a, 32b may be set to the OFF state to set the second further switch 32 OFF.

A state of the third further switch 33 is shown at 55. A state of the fourth further switch 34 is shown at 56. For buck converter operation, third further switch 33 may be set to an ON state and the fourth further switch 34 may be set to an OFF state. Energy may be released from the inductance 11 to the light emitting means through the third further switch 33. The further capacitance 15 may be charged and discharged during each switching cycle of the first switch 21.

Referring now to FIG. 7, the emergency driver 10 may be controlled such that it operates as a boost converter when the output voltage of the at least one battery 7 is greater than the operating voltage of the light emitting means 8. A state of the first further switch 31 is shown at 53. A state of the second further switch 32 is shown at 54. For boost converter operation, the first further switch 31 may be set to an OFF state and the second further switch 32 may be set to an ON state. Energy may be released from the inductance 11 to the light emitting means through the first switch 21 and the second further switch 32.

A state of the third further switch 33 is shown at 55. A state of the fourth further switch 34 is shown at 56. For boost converter operation, the third further switch 33 may be set to an OFF state and the fourth further switch 34 may be set to an ON state. Energy may be stored in the inductance 11 from the at least one battery through the fourth further switch 34. The capacitance 14 may be charged and discharged during each switching cycle of the first switch 21.

When the second further switch 32 comprises a plurality of MOSFETs 32a, 32b in a series configuration, each one of the MOSFETs 32a, 32b is set to the ON state to set the second further switch 32 ON.

In an OFF state of the emergency driver 10, e.g. during non-emergency operation, several of the controllable switches may be in a state which prevents battery discharge of the at least one battery 7. For illustration, the first switch 21, the second further switch 32 and the fourth further switch 34 may prevent battery discharge. These switches may be configured as normally-off switches which prevent battery discharge when the emergency driver 10 is in an OFF state.

The state of the further switches 31-34 does not need to be changed while the first switch 21 and the second switch 21 are made to undergo switching cycles.

A decision on the electrical connections which are established in the emergency driver, e.g. by controlling the further controllable switches 31-34 and/or by setting jumpers, may be made when combining the operating device 10 with a light emitting means 8 and at least one battery 7. The decision may be made under the control of a human expert.

Alternatively or additionally, the integrated circuit 16 or another logic of the operating device 10 may automatically determine whether the output voltage of the at least one battery 7 is greater than or less than the operating voltage of the light emitting means 8. The integrated circuit 16 or another logic of the operating device 10 may automatically cause the emergency driver 10 to operate as boost converter or buck converter, depending on the relative magnitudes of the output voltage of the at least one battery 7 and the operating voltage of the light emitting means 8.

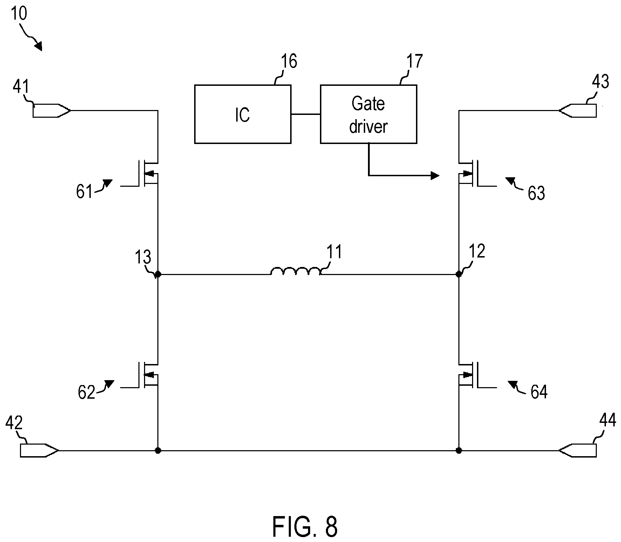

FIG. 8 is a circuit diagram of an emergency driver 10 of an operating device 3 which does not form part of the invention. The emergency driver 10 comprises an inductance 11 having a first inductance terminal 12 and a second inductance terminal 13.

The emergency driver 10 comprises a plurality of controllable switches 61-64. As will be explained in more detail below, the emergency driver 10 may be caused to act as a buck converter or as a boost converter by selecting one or several controllable switches 61-64 which are made to undergo switching cycles from the plurality of controllable switches 61-64.

The emergency driver 10 comprises a first terminal 41 and a second terminal 42 for connection with the at least one battery 7. The emergency driver 10 comprises a first controllable switch 61 connected between the first terminal 41 and the inductance 11. The emergency driver 10 comprises a second controllable switch 62 connected between the second terminal 41 and the inductance 11.

The emergency driver 10 comprises a third terminal 43 and a fourth terminal 44 for connection with the light emitting means 8. The emergency driver 10 comprises a third controllable switch 63 connected between the third terminal 43 and the inductance 11. The emergency driver 10 comprises a fourth controllable switch 64 connected between the fourth terminal 44 and the inductance 11.

The first controllable switch 61, the second controllable switch 62, the third controllable switch 63 and the fourth controllable switch 64 may respectively be implemented as semiconductor switches. The first controllable switch 61, the second controllable switch 62, the third controllable switch 63 and the fourth controllable switch 64 may respectively be implemented as semiconductor switches having an isolated gate electrode, e.g. as MOSFETs. Diodes may be integrated into the controllable switches 61-64, as for the MOSFETs of FIG: 8, or may be provided separately from the controllable switches 61-64.

The emergency driver 10 may comprise additional components, e.g. a capacitance connected between the third terminal 43 and the fourth terminal 44.

The controllable switches 61-64 may be controlled by an integrated circuit 16. A gate driver circuit 17 may be provided for charging and/or discharging the gates of the switches.

Different ones of the controllable switches 61-64 are switched ON and OFF in a cyclical manner depending on whether the output voltage of the at least one battery 7 is less than or greater than the operating voltage of the light emitting means 8.

If the output voltage of the at least one battery 7 is less than the operating voltage of the light emitting means 8, the third controllable switch 63 and the fourth controllable switch 64 are made to switch ON and OFF repeatedly during emergency operation. The third controllable switch 63 and the fourth controllable switch 64 may be made to undergo switching cycles between the ON and OFF states, which may be periodic. The first controllable switch 61 is set to ON and the second controllable switch 62 is set to OFF. Thereby, the emergency driver 10 operates as a boost converter. When the fourth controllable switch 64 is ON and the third controllable switch 63 is OFF, energy is stored in the inductance 11 by a current flow through the first controllable switch 61 and the fourth controllable switch 64. When the fourth controllable switch 64 is OFF and the third controllable switch 63 is ON, energy is released from the inductance 11 to the light emitting means through the third controllable switch 63. The current may charge a capacitor (not shown in FIG. 8) connected between the third terminal 43 and the fourth terminal 44.

If the output voltage of the at least one battery 7 is greater than the operating voltage of the light emitting means 8, the first controllable switch 61 and the second controllable switch 62 are made to switch ON and OFF repeatedly during emergency operation. The first controllable switch 61 and the second controllable switch 62 may be made to undergo switching cycles between the ON and OFF states, which may be periodic. The third controllable switch 63 is set to ON and the fourth controllable switch 64 is set to OFF. Thereby, the emergency driver 10 operates as a buck converter.

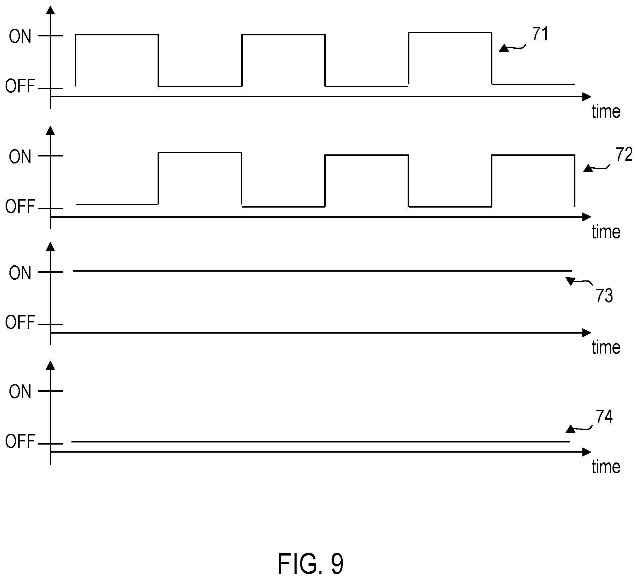

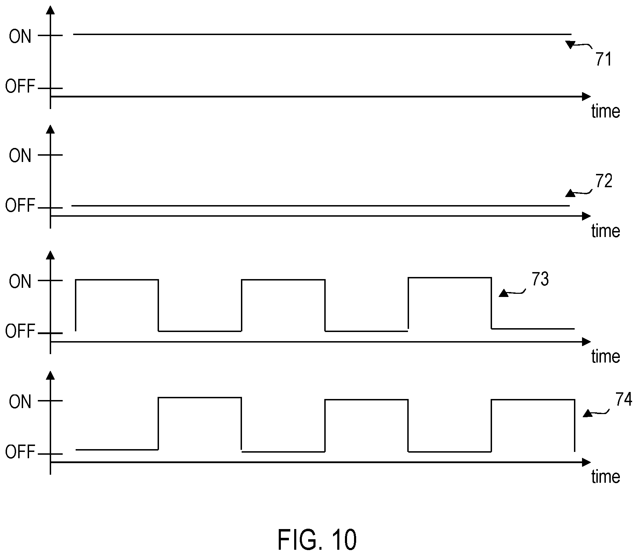

Operation of the operating device comprising the emergency driver 10 as explained with reference to FIG. 8 will be explained in more detail with reference to FIG. 9 and FIG. 10.

FIG. 9 shows states of the controllable switches of the emergency driver 10 of FIG. 8 when the emergency driver 10 is controlled to operate as a buck converter when the output voltage of the at least one battery 7 is greater than the operating voltage of the light emitting means 8.

FIG. 10 shows states of the controllable switches of the emergency driver 10 of FIG. 8 when the emergency driver 10 is controlled to operate as a boost converter when the output voltage of the at least one battery 7 is less than the operating voltage of the light emitting means 8.

Both in FIG. 9 and in FIG. 10 the ON state of a switch represents a conducting state in which the source-drain resistance is less than in an OFF state, in which the source-drain path may be high-ohmic. Both in FIG. 9 and in FIG. 10, a state of the first controllable switch 61 is shown at 71, a state of the second controllable switch 62 is shown at 72, a state of the third controllable switch 63 is shown at 73, and a state of the fourth controllable switch 64 is shown at 74.

Referring now to FIG. 9, the emergency driver 10 may be controlled such that it operates as a buck converter when the output voltage of the at least one battery 7 is less than the operating voltage of the light emitting means 8. In this case, the first controllable switch 61 and the second controllable switch 62 are controlled to undergo switching cycles between the ON and OFF states. An output current and/or output voltage may be monitored to determine at which time(s) the switching state of the first controllable switch 61 and/or the second controllable switch 62 is to be changed.

When the emergency driver 10 is controlled such that it operates as a buck converter, the third controllable switch 63 is ON and the fourth controllable switch 64 is OFF.

Referring now to FIG. 10, the emergency driver 10 may be controlled such that it operates as a boost converter when the output voltage of the at least one battery 7 is greater than the operating voltage of the light emitting means 8. In this case, the third controllable switch 63 and the fourth controllable switch 64 are controlled to undergo switching cycles between the ON and OFF states. An output current and/or output voltage may be monitored to determine at which time(s) the switching state of the third controllable switch 63 and/or fourth controllable switch 64 is to be changed.

When the emergency driver 10 is controlled such that it operates as a boost converter, the first controllable switch 61 is ON and the second controllable switch 62 is OFF.

A decision on whether the pair of switches 61, 62 or the pair of switches 63, 64 are cyclically switched in the emergency driver 10 may be made when combining the operating device 10 with a light emitting means 8 and at least one battery 7. The decision may be made under the control of a human expert.

Alternatively or additionally, the integrated circuit 16 or another logic of the operating device 10 may automatically determine whether the output voltage of the at least one battery 7 is greater than or less than the operating voltage of the light emitting means 8. The integrated circuit 16 or another logic of the operating device 10 may automatically cause the emergency driver 10 to operate as boost converter or buck converter, depending on the relative magnitudes of the output voltage of the at least one battery 7 and the operating voltage of the light emitting means 8.

When the emergency driver 10 is OFF, e.g. in non-emergency operation, the controllable switches 61-64 may all be OFF to prevent battery discharge.

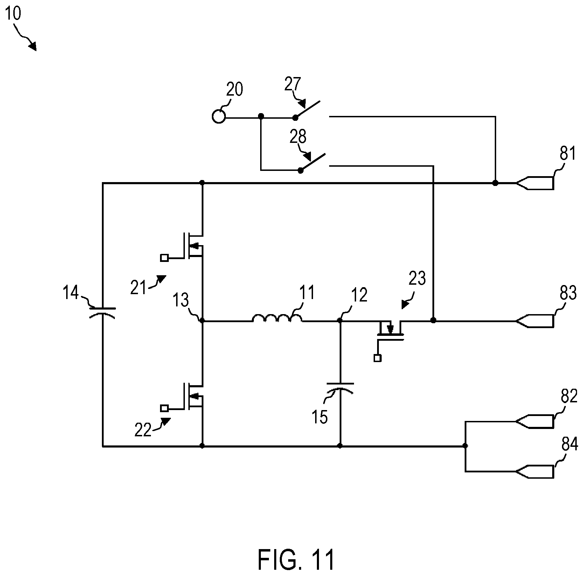

FIG. 11 is a circuit diagram of another emergency driver 10 of an operating device 3 which does not form part of the invention. The emergency driver 10 comprises a first terminal 81, a second terminal 82, a third terminal 83, and a fourth terminal 84.

As will be explained in more detail below, the emergency driver 10 may be made to operate as a buck converter when the first terminal 81 and the second terminal 82 are assigned to being connected with the at least one battery 7 and the third terminal 83 and the fourth terminal 84 are assigned to being connected with the light emitting means 8.

The emergency driver 10 comprises an inductance 11 having a first inductance terminal 12 and a second inductance terminal 13. The emergency driver 10 comprises a first controllable switch 21 connected between the first terminal 81 and the second inductance terminal 13. The emergency driver 10 comprises a second controllable switch 22 connected between the second inductance terminal 13 and the second and fourth terminals 82, 84. The emergency driver 10 may comprise a third controllable switch 23 connected between the first inductance terminal 12 and the third terminal 83.

The emergency driver 10 may comprise a capacitance 14 in parallel with the series connection of the first controllable switch 21 and the second controllable switch 22. The capacitance 14 may be formed by a capacitor. The capacitance 14 may be formed by a parasitic capacitance. The capacitance 14 may be charged and discharged when the emergency driver 10 operates as a boost converter.

The emergency driver 10 may comprise a further capacitance 15 connected between the first inductance terminal 12 and the second and fourth terminals 82, 84. The further capacitance 15 may be formed by a further capacitor. The further capacitance 15 may be formed by a parasitic capacitance. The further capacitance 15 may be charged and discharged when the emergency driver 10 operates as a buck converter.

When the output voltage of the at least one battery 7 is greater than the operating voltage of the light emitting means 8, the at least one battery 7 is connected to the first and second terminals 81, 82 and the light emitting means is connected to the third and fourth terminals 83, 84. This may be done in various ways, e.g. by setting jumpers (not shown in FIG. 11). During emergency operation, the first controllable switch 21 and the second controllable switch 22 are controlled to undergo switching cycles, similarly as explained with reference to FIG. 6 and FIG. 7. The third controllable switch 23 is ON. The energy driver 10 operates as a buck converter.

When the output voltage of the at least one battery 7 is less than the operating voltage of the light emitting means 8, the at least one battery 7 is connected to the third and fourth terminals 83, 84 and the light emitting means is connected to the first and second terminals 81, 82. This may be done in various ways, e.g. by setting jumpers (not shown in FIG. 11). During emergency operation, the first controllable switch 21 and the second controllable switch 22 are controlled to undergo switching cycles, similarly as explained with reference to FIG. 6 and FIG. 7. The third controllable switch 23 is ON. The energy driver 10 operates as a boost converter.

When the emergency driver 10 is OFF, e.g. during non-emergency operation, the third controllable switch 23 is OFF to prevent the at least one battery 7 from discharging through the light emitting means 8.

In order to account for the fact that the at least one battery 7 may be connected to either the first terminal 81 or the third terminal 83, the operating device 3 may comprise a first charging control switch 27 and a second charging control switch 28. If the at least one battery 7 is connected to the first terminal 81 because the output voltage of the at least one battery is less than the operating voltage of the light emitting means 8, the first charging control switch 27 is ON during a charging operation while the second charging control switch 28 remains OFF. If the at least one battery 7 is connected to the third terminal 83 because the output voltage of the at least one battery is greater than the operating voltage of the light emitting means 8, the second charging control switch 28 is ON during a charging operation while the first charging control switch 27 remains OFF. A charging current may be supplied via a charging terminal 20.

For any one of the various embodiments, a decision on whether the emergency driver 10 is to operate as a buck converter or as a boost converter may be made by a human expert. The decision may be made when assembling batteries, operating devices and light emitting means to light sources or other illumination systems. Alternatively or additionally, a logic of the operating device 3, e.g. the integrated circuit 16, may control one or several controllable switches in dependence on whether the output voltage of the at least one battery 7 is less than or greater than the operating voltage of the light emitting means 8.

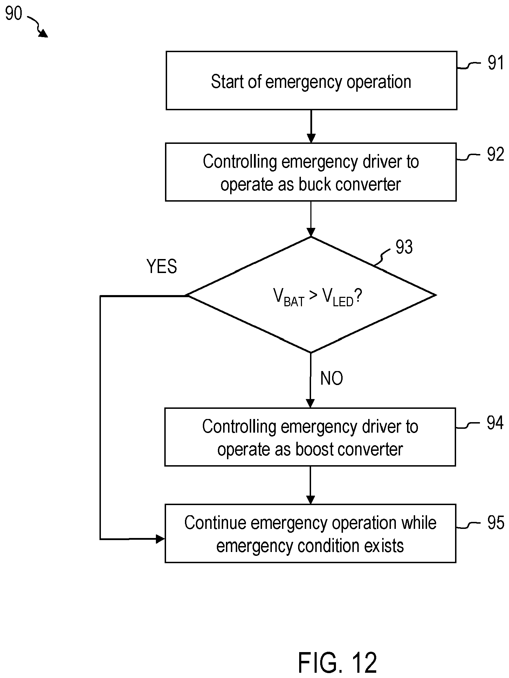

FIG. 12 is a flow chart of a method 90 which may be performed by a logic of the operating device 3 according to an embodiment.

At 91, emergency operation is started. Emergency operation may be initiated by a command transmitted over a dedicated communication interface or transmitted via power line communication. Emergency operation may be triggered when the operating device detects a failure of the supply 2, e.g. due to a network outage.

At 92, the emergency driver is controlled to operate as a buck converter.

At 93, it is determined whether the output voltage of the at least one battery 7 is greater than or less than the operating voltage of the light emitting means. To this end, a LED current may be measured to determine whether buck operation is sufficient to cause the LED current to flow. If the output voltage of the at least one battery 7 is greater than the operating voltage of the light emitting means 8, the method continues at 95.

At 94, if is determined that the output voltage of the at least one battery 7 is not greater than the operating voltage of the light emitting means 8, the emergency driver is controlled to operate as a boost converter.

At 95, emergency operation may be continued while the emergency condition persists.

In the operating device according to any embodiment, the emergency driver may be configured as a one-stage converter. I.e., only one converter stage may be connected between the at least one battery 7 and the light emitting means 8.

In the operating device according to any embodiment, various types of batteries may be used. The at least one battery 7 may comprise one battery or more than one battery, which each may be selected from a group consisting of a Ni-Cad/NiMH battery or a lithium cell. The operating device according to any embodiment can be used in combination with different numbers of LEDs connected in series. For illustration, the at least one battery may comprise one, two, three, four or more than four NiCad/NiMH batteries.

The operating devices according to embodiments provide flexibility in the sense that they can be used in association with different types of batteries for emergency operation. The losses and complexity associated with emergency drivers having multi-stage converter configurations may be mitigated.

While embodiments have been described in detail with reference to the drawings, modifications may be implemented in other embodiments. For illustration rather than limitation, while embodiments have been described in which controllable switches are controlled by an integrated circuit, other control circuits may be used in other implementations.

## Claims

1. An operating device for a light emitting means (8), the light emitting means (8) comprising at least one light emitting diode (9),
the operating device (3) comprising:
an emergency driver (10) having terminals for at least one battery (7) to provide emergency power supply, the emergency driver (10) comprising an inductance (11),
wherein the emergency driver (10) is configured to store energy in the inductance (11) and to release energy from the inductance (11) to the light emitting means (8) such that
the emergency driver (10) operates as a buck converter if an output voltage of the at least one battery (7) is greater than an operating voltage of the light emitting means (8) and
the emergency driver (10) operates as a boost converter if the output voltage of the at least one battery (7) is less than the operating voltage of the light emitting means (8),
wherein the emergency driver (10) comprises a plurality of controllable switches (21, 22, 31-34; 21, 22, 31, 32a, 32b, 33, 34; 61-64; 21-23), and
wherein the operating device (3) comprises a control circuit (16) configured to generate control signals for the plurality of controllable switches (21, 22, 31-34; 21, 22, 31, 32a, 32b, 33, 34) which depend on whether the operating voltage of the light emitting means (8) is greater than or less than the output voltage of the at least one battery (7) for selectively operating the emergency driver (10) either as the buck converter or as the boost converter,
**characterized in that**
the control circuit (16) is configured to cause at least one switch (21, 22) of the plurality of controllable switches (21, 22, 31-34; 21, 22, 31, 32a, 32b, 33, 34) to perform a plurality of switching cycles to store energy in the inductance (11) and/or to release the energy from the inductance (11) to the light emitting means (8) both when the emergency driver (10) is operated as the buck converter and when the emergency driver (10) is operated as the boost converter.

2. The operating device of claim 1,
wherein the operating device (3) is configured such that a conduction path is established from an inductance terminal (12) to either the at least one battery (7) or the light emitting means (8), the conduction path being dependent on whether the operating voltage of the light emitting means (8) is greater than or less than the output voltage of the at least one battery (7).

3. The operating device of claim 1 or claim 2,
wherein the control circuit (16) is configured to set at least one further switch (31-34; 31, 32a, 32b, 33, 34) of the plurality of controllable switches (21, 22, 31-34; 21, 22, 31, 32a, 32b, 33, 34) to a state which depends on whether the operating voltage of the light emitting means (8) is greater than or less than the output voltage of the at least one battery (7).

4. The operating device of claim 3,
wherein the control circuit (16) is configured to maintain the at least one further switch (31-34; 31, 32a, 32b, 33, 34) in the state throughout the plurality of switching cycles of the at least one switch (21, 22) which undergoes switching cycles.

5. The operating device of claim 3 or claim 4,
wherein the at least one further switch comprises a first further switch (31) connected between the inductance (11) and the terminals (41, 43) for the at least one battery (7) and a second further switch (32) connected between the inductance (11) and the terminals for the light emitting means (8).

6. The operating device of any one of claims 1 to 5,
wherein the control circuit (16) is configured to alter the control signals for the plurality of controllable switches (21, 22, 31-34; 21, 22, 31, 32a, 32b, 33, 34) to cause the emergency driver (10) to stop operating as a buck converter and to start operating as a boost converter.

7. The operating device of claim 6,
wherein the control circuit (16) is configured to alter the control signals in response to detecting that the operating voltage of the light emitting means (8) is greater than the output voltage of the at least one battery (7).

8. The operating device of any one of the preceding claims,
wherein the emergency driver (10) is a one-stage converter connected between the at least one battery (7) and the light emitting means (8).

9. A system, comprising:
the operating device (3) of any one of the preceding claims,
a light emitting means (8) connected to the operating device (3), the light emitting means (8) comprising at least one light emitting diode (9), and
at least one battery (7) connected to the emergency driver (10) of the operating device (3).

## Patentansprüche

1. Betriebsvorrichtung für ein lichtemittierendes Mittel (8), wobei das lichtemittierende Mittel (8) mindestens eine lichtemittierende Diode (9) umfasst,
wobei die Betriebsvorrichtung (3) Folgendes umfasst:
einen Notlichttreiber (10) mit Anschlüssen für mindestens eine Batterie (7), um eine Notstromversorgung bereitzustellen, wobei der Notlichttreiber (10) eine Induktivität (11) umfasst,
wobei der Notlichttreiber (10) konfiguriert ist, um Energie in der Induktivität (11) zu speichern und Energie von der Induktivität (11) an das lichtemittierende Mittel (8) freizugeben, so dass
der Notlichttreiber (10) als ein Abwärtswandler dient, wenn eine Ausgangsspannung der mindestens einen Batterie (7) größer als eine Betriebsspannung des lichtemittierenden Mittels (8) ist, und
der Notlichttreiber (10) als ein Aufwärtswandler dient, wenn die Ausgangsspannung der mindestens einen Batterie (7) kleiner als die Betriebsspannung des lichtemittierenden Mittels (8) ist,
wobei der Notlichttreiber (10) eine Vielzahl von steuerbaren Schaltern (21, 22, 31 - 34; 21, 22, 31, 32a, 32b, 33, 34; 61 - 64; 21 - 23) umfasst, und
wobei die Betriebsvorrichtung (3) eine Steuerschaltung (16) umfasst, die konfiguriert ist, um Steuersignale für die Vielzahl von steuerbaren Schaltern (21, 22, 31 - 34; 21, 22, 31, 32a, 32b, 33, 34) zu erzeugen, die davon abhängen, ob die Betriebsspannung des lichtemittierenden Mittels (8) größer oder kleiner als die Ausgangsspannung der mindestens einen Batterie (7) ist, um selektiv den Notlichttreiber (10) entweder als den Abwärtswandler oder als den Aufwärtswandler zu betreiben,
**dadurch gekennzeichnet, dass**
die Steuerschaltung (16) konfiguriert ist, um zu verursachen, dass mindestens ein Schalter (21, 22) der Vielzahl von steuerbaren Schaltern (21, 22, 31 - 34; 21, 22, 31, 32a, 32b, 33, 34) eine Vielzahl von Schaltzyklen durchführt, um Energie in der Induktivität (11) zu speichern und/oder Energie von der Induktivität (11) an das lichtemittierende Mittel (8) freizugeben, sowohl wenn der Notlichttreiber (10) als der Abwärtswandler dient, als auch wenn der Notlichttreiber (10) als der Aufwärtswandler dient.

2. Betriebsvorrichtung nach Anspruch 1, wobei
die Betriebsvorrichtung (3) derart konfiguriert ist, dass ein Leitungsweg von einem Induktivitätsanschluss (12) entweder zu der mindestens einen Batterie (7) oder dem lichtemittierenden Mittel (8) festgesetzt ist, wobei der Leitungsweg davon abhängt, ob die Betriebsspannung des lichtemittierenden Mittels (8) größer oder kleiner als die Ausgangsspannung der mindestens einen Batterie (7) ist.

3. Betriebsvorrichtung nach Anspruch 1 oder Anspruch 2, wobei
die Steuerschaltung (16) konfiguriert ist, um mindestens einen weiteren Schalter (31 - 34; 31, 32a, 32b, 33, 34) der Vielzahl von steuerbaren Schaltern (21, 22, 31 - 34; 21, 22, 31, 32a, 32b, 33, 34) auf einen Zustand einzustellen, der davon abhängt, ob die Betriebsspannung des lichtemittierenden Mittels (8) größer oder kleiner als die Ausgangsspannung der mindestens einen Batterie (7) ist.

4. Betriebsvorrichtung nach Anspruch 3, wobei
die Steuerschaltung (16) konfiguriert ist, um den mindestens einen weiteren Schalter (31 - 34; 31, 32a, 32b, 33, 34) im Zustand während der Vielzahl von Schaltzyklen des mindestens einen Schalters (21, 22) zu halten, der Schaltzyklen unterzogen ist.

5. Betriebsvorrichtung nach Anspruch 3 oder Anspruch 4, wobei
der mindestens eine weitere Schalter einen ersten weiteren Schalter (31), der zwischen der Induktivität (11) und den Anschlüssen (41, 43) für die mindestens eine Batterie (7) verbunden ist, und einen zweiten weiteren Schalter (32) umfasst, der zwischen der Induktivität (11) und den Anschlüssen für das lichtemittierende Mittel (8) verbunden ist, umfasst.

6. Betriebsvorrichtung nach einem der Ansprüche 1 bis 5, wobei
die Steuerschaltung (16) konfiguriert ist, um die Steuersignale für die Vielzahl von steuerbaren Schaltern (21, 22, 31 - 34; 21, 22, 31, 32a, 32b, 33, 34) zu ändern, um zu versuchen, dass der Notlichttreiber (10) aufhört, wie ein Abwärtswandler zur arbeiten, und beginnt, wie ein Aufwärtswandler zu arbeiten.

7. Betriebsvorrichtung nach Anspruch 6, wobei
die Steuerschaltung (16) konfiguriert ist, um die Steuersignale in Reaktion auf den Nachweis zu ändern, dass die Betriebsspannung des lichtemittierenden Mittels (8) größer als die Ausgangsspannung der mindestens einen Batterie (7) ist.

8. Betriebsvorrichtung nach einem der vorhergehenden Ansprüche,
wobei der Notlichttreiber (10) ein einstufiger Wandler ist, der zwischen der mindestens einen Batterie (7) und dem lichtemittierenden Mittel (8) verbunden ist.

9. System, umfassend:
die Betriebsvorrichtung (3) nach einem der vorhergehenden Ansprüche,
ein lichtemittierendes Mittel (8), das mit der Betriebsvorrichtung (3) verbunden ist, wobei das lichtemittierende Mittel (8) mindestens eine lichtemittierende Diode (9) umfasst, und
mindestens eine Batterie (7), die mit dem Notlichttreiber (10) der Betriebsvorrichtung (3) verbunden ist.

## Revendications

1. Dispositif de mise en oeuvre pour des moyens d'émission de lumière (8), les moyens d'émission de lumière (8) comprenant au moins une diode électroluminescente (9),
le dispositif de mise en oeuvre (3) comprenant :
un dispositif de commande d'urgence (10) comportant des bornes pour qu'au moins une batterie (7) fournisse une alimentation de secours, le dispositif de commande d'urgence (10) comprenant une inductance (11),
dans lequel le dispositif de commande d'urgence (10) est configuré pour stocker de l'énergie dans l'inductance (11) et pour libérer de l'énergie de l'inductance (11) vers les moyens d'émission de lumière (8) de sorte que
le dispositif de commande d'urgence (10) fonctionne en tant que convertisseur abaisseur de type buck si une tension de sortie de ladite au moins une batterie (7) est supérieure à une tension de fonctionnement des moyens d'émission de lumière (8), et
le dispositif de commande d'urgence (10) fonctionne en tant que convertisseur élévateur si la tension de sortie de ladite au moins une batterie (7) est inférieure à la tension de fonctionnement des moyens d'émission de lumière (8),
dans lequel le dispositif de commande d'urgence (10) comprend une pluralité de commutateurs pouvant être commandés (21, 22, 31 à 34 ; 21, 22, 31, 32a, 32b, 33, 34 ; 61 à 64 ; 21 à 23), et
dans lequel le dispositif de mise en oeuvre (3) comprend un circuit de commande (16) configuré pour générer des signaux de commande pour la pluralité de commutateurs pouvant être commandés (21, 22, 31 à 34 ; 21, 22, 31, 32a, 32b, 33, 34) qui dépendent du fait que la tension de fonctionnement des moyens d'émission de lumière (8) est supérieure ou inférieure à la tension de sortie de ladite au moins une batterie (7) pour mettre en oeuvre de manière sélective le dispositif de commande d'urgence (10) soit en tant que convertisseur abaisseur de type buck, soit en tant que convertisseur élévateur,
**caractérisé en ce que**
le circuit de commande (16) est configuré pour amener au moins un commutateur (21, 22) de la pluralité de commutateurs pouvant être commandés (21, 22, 31 à 34 ; 21, 22, 31, 32a, 32b, 33, 34) à effectuer une pluralité de cycles de commutation pour stocker de l'énergie dans l'inductance (11) et/ou pour libérer de l'énergie de l'inductance (11) vers les moyens d'émission de lumière (8) à la fois lorsque le dispositif de commande d'urgence (10) est mis en oeuvre en tant que convertisseur abaisseur de type buck et lorsque le dispositif de commande d'urgence (10) est mis en oeuvre en tant que convertisseur élévateur.

2. Dispositif de mise en oeuvre selon la revendication 1,
dans lequel le dispositif de mise en oeuvre (3) est configuré de sorte qu'un trajet de conduction soit établi d'une borne d'inductance (12) soit vers ladite au moins une batterie (7), soit vers les moyens d'émission de lumière (8), le trajet de conduction étant fonction du fait que la tension de fonctionnement des moyens d'émission de lumière (8) est supérieure ou inférieure à la tension de sortie de ladite au moins une batterie (7).

3. Dispositif de mise en oeuvre selon la revendication 1 ou la revendication 2,
dans lequel le circuit de commande (16) est configuré pour mettre au moins un commutateur supplémentaire (31 à 34 ; 31, 32a, 32b, 33, 34) de la pluralité de commutateurs pouvant être commandés (21, 22, 31 à 34 ; 21, 22, 31, 32a, 32b, 33, 34) dans un état qui dépend du fait que la tension de fonctionnement des moyens d'émission de lumière (8) est supérieure ou inférieure à la tension de sortie de ladite au moins une batterie (7).

4. Dispositif de mise en oeuvre selon la revendication 3,
dans lequel le circuit de commande (16) est configuré pour maintenir ledit au moins un commutateur supplémentaire (31 à 34 ; 31, 32a, 32b, 33, 34) dans l'état dans la pluralité de cycles de commutation dudit au moins un commutateur (21, 22) qui subit les cycles de commutation.

5. Dispositif de mise en oeuvre selon la revendication 3 ou la revendication 4,
dans lequel ledit au moins un commutateur supplémentaire comprend un premier commutateur supplémentaire (31) connecté entre l'inductance (11) et les bornes (41, 43) pour ladite au moins une batterie (7) et un deuxième commutateur supplémentaire (32) connecté entre l'inductance (11) et les bornes pour les moyens d'émission de lumière (8).

6. Dispositif de mise en oeuvre selon l'une quelconque des revendications 1 à 5,
dans lequel le circuit de commande (16) est configuré pour modifier les signaux de commande pour la pluralité de commutateurs pouvant être commandés (21, 22, 31 à 34 ; 21, 22, 31, 32a, 32b, 33, 34) pour amener le dispositif de commande d'urgence (10) à cesser de fonctionner en tant que convertisseur abaisseur de type buck et à commencer de fonctionner en tant que convertisseur élévateur.

7. Dispositif de mise en oeuvre selon la revendication 6,
dans lequel le circuit de commande (16) est configuré pour modifier les signaux de commande en réponse à la détection que la tension de fonctionnement des moyens d'émission de lumière (8) est supérieure à la tension de sortie de ladite au moins une batterie (7).

8. Dispositif de mise en oeuvre selon l'une quelconque des revendications précédentes,
dans lequel le dispositif de commande d'urgence (10) est un convertisseur à étage unique connecté entre ladite au moins une batterie (7) et les moyens d'émission de lumière (8).

9. Système, comprenant :
le dispositif de mise en oeuvre (3) selon l'une quelconque des revendications précédentes,
des moyens d'émission de lumière (8) connectés au dispositif de mise en oeuvre (3), les moyens d'émission de lumière (8) comprenant au moins une diode électroluminescente (9), et
au moins une batterie (7) connectée au dispositif de commande d'urgence (10) du dispositif de mise en oeuvre (3).
